# EUROPÄISCHE PATENTSCHRIFT

(11) **EP 2 841 178 B1**
(45) Veröffentlichungstag und Bekanntmachung des Hinweises auf die Patenterteilung: **27.04.2016**
(21) Anmeldenummer: 13715909.1
(22) Anmeldetag: 20.03.2013
(51) Int. Cl.: B01D 21/24, B01D 21/34, C02F 1/00

(54) **VORRICHTUNG ZUM DEKANTIEREN EINES IN EINEM KLÄRBECKEN AUFGENOMMENEN ÜBERSTANDS**
DEVICE FOR DECANTING A SUPERNATANT RECEIVED IN A CLARIFIER
DISPOSITIF POUR DÉCANTER UN EXCÈS PRÉLEVÉ DANS UN BASSIN DE DÉCANTATION

(30) Priorität: 27.04.2012 DE 102012207146
(43) Veröffentlichungstag der Anmeldung: 04.03.2015
(73) Patentinhaber: INVENT Umwelt- und Verfahrenstechnik AG, 91058 Erlangen (DE)
(72) Erfinder: HÖFKEN, Marcus, 91054 Erlangen (DE)
(74) Vertreter: Gassner, Wolfgang
(86) Internationale Anmeldenummer: PCT/EP2013/055835
(87) Internationale Veröffentlichungsnummer: WO 2013/160030

(56) Entgegenhaltungen:
- EP-A1- 0 128 122
- EP-A2- 0 979 668
- WO-A1-95/23638
- CN-U- 202 015 527
- DE-A1-102006 036 591
- JP-A- 2002 102 606
- US-A- 4 154 678
- US-A1- 2010 018 929

## Beschreibung

Die Erfindung betrifft eine Vorrichtung zum Dekantieren eines in einem Klärbecken aufgenommenen Überstands.

Die WO 2008/014856 bzw. die DE 10 2006 036 591 A1 betreffen eine Vorrichtung zum Dekantieren eines in einem Klärbecken aufgenommenen Überstands, umfassend: Einen an einem Klärbecken schwenkbar angebrachten Dekanter mit einem Rohr, dessen eines Ende schwenkbar in einem Schwenklager gehalten ist und an dessen anderen Ende ein sich senkrecht dazu erstreckender Dekanterkopf mit einer Wassereintrittsöffnung vorgesehen ist, und eine über ein längenveränderbares Stellglied mit dem Dekanter verbundene Schwenkvorrichtung zum Anheben und Absenken der Wassereintrittsöffnung bezüglich eines Bodens des Klärbeckens.

Nach dem Stand der Technik ist es weiterhin allgemein bekannt, am Dekanterkopf einen hydrostatischen Sensor anzubringen. Der hydrostatische Sensor ist über ein Kabel mit einer außerhalb des Klärbeckens vorgesehenen Steuerung verbunden. Mit der Steuerung wird ein Motor zum Antrieb der Seilwinde in Abhängigkeit der vom hydrostatischen Sensor gelieferten Signale so gesteuert, dass eine Eintauchtiefe einer am Dekanterkopf vorgesehenen Wassereintrittsöffnung in einem vorgegebenen Bereich gehalten wird.

In der Praxis kommt es mitunter vor, dass der hydrostatische Sensor ausfällt oder das zwischen dem hydrostatischen Sensor und der Steuerung vorgesehene Kabel beschädigt wird. Im Falle der Beschädigung des Kabels kann es überdies zu einer Beschädigung der Steuerung kommen.

Die EP 0 128 122 A1 offenbart einen Dekanterkopf, welcher an einem Ende eines Rohrs befestigt ist. Am anderen Ende ist das Rohr schwenkbar gelagert. Der Dekanterkopf ist an einem vertikal verstellbaren Stab befestigt und damit höhenverstellbar.

Die US 4,158,678 A offenbart einen mittels eines Seilzugs anhebbaren Dekanterkopf.

Die EP 0 979 668 A2 betrifft einen Dekanterkopf, welcher an einem Ende eines Rohrs befestigt ist. Am anderen Ende ist das Rohr schwenkbar gelagert. Der Dekanterkopf ist mittels eines Linearantriebs höhenverstellbar.

Die WO 95/23638 A1 offenbart eine mittels eines Linearantriebs gesteuerte Überlaufkante.

Die DE 70 38 786 U betrifft einen Dekanterkopf, welcher am einen Ende eines Rohrs befestigt ist. Das andere Ende des Rohrs ist schwenkbar gelagert. Der Dekanterkopf ist mittels einer Kette höhenverstellbar.

Die DE 86 23 253 U1 betrifft einen Dekanterkopf, welcher an einer vertikalen, in einer Führung verfahrbaren Vorrichtung angebracht ist. Die Vorrichtung ist mittels eines Seilzugs vertikal bewegbar.

Die US 4,693,821 A offenbart einen Dekanterkopf, der am einen Ende eines Rohrs befestigt ist. Das Rohr ist an seinem anderen Ende schwenkbar gelagert. Der Dekanterkopf ist mittels eines Linearantriebs höhenverstellbar.

Aufgabe der Erfindung ist es, die Nachteile nach dem Stand der Technik zu beseitigen. Es soll insbesondere eine Vorrichtung zum Dekantieren eines in einem Klärbecken aufgenommenen Überstands angegeben werden, welche störunanfällig und robust ist. Nach einem weiteren Ziel der Erfindung soll die Vorrichtung mit einem vereinfachten Herstellungsaufwand herstellbar sein.

Diese Aufgabe wird durch die Merkmale des Anspruchs 1 gelöst. Zweckmäßige Ausgestaltungen der Erfindung ergeben sich aus den Merkmalen der Ansprüche 2 bis 8.

Nach Maßgabe der Erfindung umfasst die gattungsgemäße Vorrichtung zum Dekantieren eines in einem Klärbecken aufgenommenen Überstands folgende Merkmale:
eine erste Messeinrichtung zur Messung einer Füllhöhe des im Klärbecken aufgenommenen Abwassers,
eine Einrichtung zur Bestimmung einer Länge des Stellglieds,
eine Auswerteeinrichtung mit der aus der Länge des Stellglieds ein Abstand der Wassereintrittsöffnung des Dekanters zum Boden des Klärbeckens bestimmbar ist und
eine Steuerung zum Steuern der Schwenkvorrichtung derart, dass eine sich aus der Differenz zwischen der Füllhöhe und dem Abstand ergebende Eintauchtiefe der Wassereintrittsöffnung in einem vorgegebenen Bereich gehalten wird.

In Abkehr vom Stand der Technik kann bei der vorgeschlagenen Vorrichtung auf das Vorsehen eines hydrostatischen Sensors am Dekanterkopf verzichtet werden. Infolgedessen kann eine dadurch bedingte Stör- oder Reparaturanfälligkeit herkömmlicher Vorrichtungen vermieden werden. Die vorgeschlagene erfindungsgemäße Vorrichtung ist einfach aufgebaut, robust und störunanfällig. Bei der erfindungsgemäßen Vorrichtung können sämtliche zur Ermittlung der Eintauchtiefe erforderlichen Parameter mittels Messeinrichtungen erfasst werden, welche außerhalb des im Klärbecken aufgenommenen Abwassers angebracht sind. Es entfällt die Notwendigkeit einer unerwünschten Verlegung von Kabeln durch das im Klärbecken aufgenommene Abwasser. Die vorgeschlagene Vorrichtung zeichnet sich durch einen geringeren Herstellungs- und Montageaufwand aus.

Bei dem längenveränderbaren Stellglied kann es sich um ein hydraulisch verstellbares Rohr, ein beispielsweise mittels eines Spindelantriebs oder dgl. verstellbares Stellglied usw. handeln. Nach einer besonders vorteilhaften Ausgestaltung ist das Stellglied aus der folgenden Gruppe ausgewählt: Seil, Gurt, Kette. In diesem Fall umfasst die Schwenkvorrichtung eine Winde zur Aufnahme eines solchen Stellglieds. Zum Antrieb der Winde kann ein Elektromotor oder ein Hydraulikmotor vorgesehen sein. Das vorgeschlagene Stellglied sowie die vorgeschlagene Schwenkvorrichtung sind robust und störunanfällig und überdies relativ kostengünstig verfügbar.

Insbesondere bei Verwendung eines Gurts kann eine erste Breite der Winde etwa einer zweiten Breite des Gurts entsprechen, so dass der Gurt im Wesentlichen deckungsgleich auf der Winde aufgenommen ist. Die Verwendung eines Gurts und einer dazu korrespondierenden Winde ermöglicht ein reproduzierbares Auf- und Abwickeln. Damit kann die Eintauchtiefe der Wassereintrittsöffnung besonders genau gesteuert werden.

Nach einer weiteren Ausgestaltung umfasst die Einrichtung zur Bestimmung der Länge des Stellglieds eine zweite Messeinrichtung zur Messung eines Drehwinkels der Winde. Eine solche Messeinrichtung ist herkömmlich verfügbar. Sie kann beispielsweise an einem Motor, einem ggf. dem Motor nachgeordneten Getriebe oder an der Winde selbst vorgesehen sein. Die zweite Messeinrichtung umfasst beispielsweise eine Loch- oder Schlitzscheibe und einen optischen Detektor, mit dem im Falle einer Rotation der Loch- oder Schlitzscheibe aus der ermittelten Anzahl der Löcher oder Schlitze ein Drehwinkel bestimmt werden kann. Andere geeignete Messeinrichtungen umfassen beispielsweise eine Scheibe mit magnetischen Markierungen und einen dazu korrespondierenden Detektor oder dgl. Auch die Verwendung von Bewegungssensoren, beispielsweise Gyrosensoren oder dgl., ist denkbar.

Aus der Messung des Drehwinkels kann auf die jeweilige Länge des Stellglieds geschlossen werden. Der Drehwinkel und die sich daraus ergebende Länge des Stellglieds wiederum korrespondieren zum Abstand. Im Falle der Verwendung, beispielsweise eines Gurts und einer Winde besteht zwischen dem Drehwinkel und der Länge des Stellglieds bzw. dem Abstand keine lineare Beziehung. In diesem Fall ist in der Auswerteeinrichtung eine entsprechende Korrekturfunktion hinterlegt, mit der aus dem gemessenen Drehwinkel auf den jeweiligen Abstand geschlossen werden kann. Eine solche Korrekturfunktion kann fest vorgegeben sein. Sie kann aber auch vor Ort durch Erfassung einer maximalen und einer minimalen Schwenkposition des Dekanters errechnet und in der Auswerteeinrichtung gespeichert werden. Damit ist es besonders einfach möglich, die Steuerung an die jeweiligen Gegebenheiten anzupassen. - Die Auswerteeinrichtung kann eine Regelstufe umfassen, mit der die Eintauchtiefe regelbar ist.

Nach einer weiteren Ausgestaltung umfasst die Steuerung eine erste Schaltfunktion, mit der ein Betrieb der Schwenkvorrichtung bei Erreichen einer vorgegebenen oberen Position des Dekanterkopfs unterbrochen wird. Ferner kann die Steuerung eine zweite Schaltfunktion umfassen, mit der ein Betrieb der Schwenkvorrichtung bei Erreichen einer vorgegebenen unteren Position des Dekanterkopfs unterbrochen wird. Die Schaltfunktionen können beispielsweise programmierbar sein. Es können aber auch geeignete Schaltelemente zur Erfassung der oberen und der unteren Position des Dekanterkopfs vorgesehen sein. Mit den vorgeschlagenen Schaltfunktionen wird ein Schwenkbetrieb außerhalb eines vorgegebenen Schwenkbereichs des Dekanters sicher und zuverlässig vermieden. Das trägt weiter zur Störunanfälligkeit der Vorrichtung bei.

Nachfolgend wird eine Ausgestaltung der Erfindung anhand der Zeichnungen näher erläutert. Es zeigen:
- Fig. 1: eine Draufsicht auf eine erfindungsgemäße Vorrichtung,
- Fig. 2: eine Schnittansicht gemäß der Schnittlinie A-A in Fig. 1,
- Fig. 3: schematisch ein Blockschaltbild einer Steuerung,
- Fig. 4: schematisch die Länge des Stellglieds über der Anzahl der Umdrehungen der Winde und

- Fig. 5: schematisch den Abstand über der Anzahl der Umdrehungen der Winde.

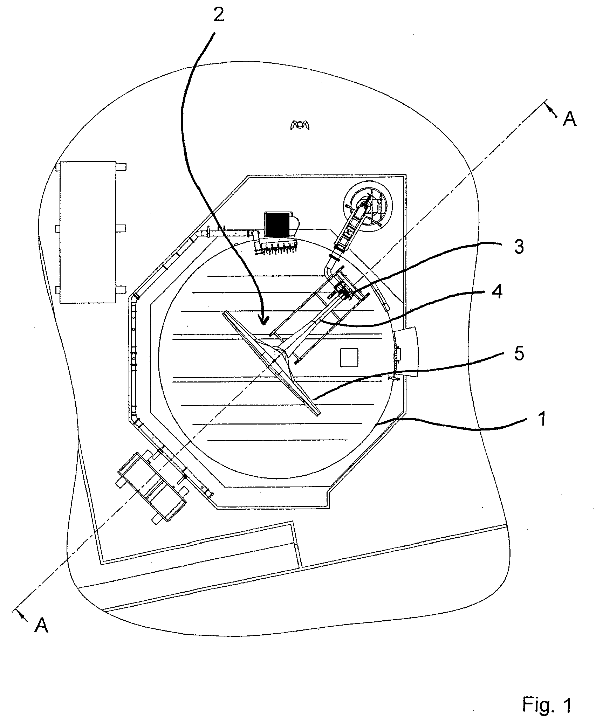

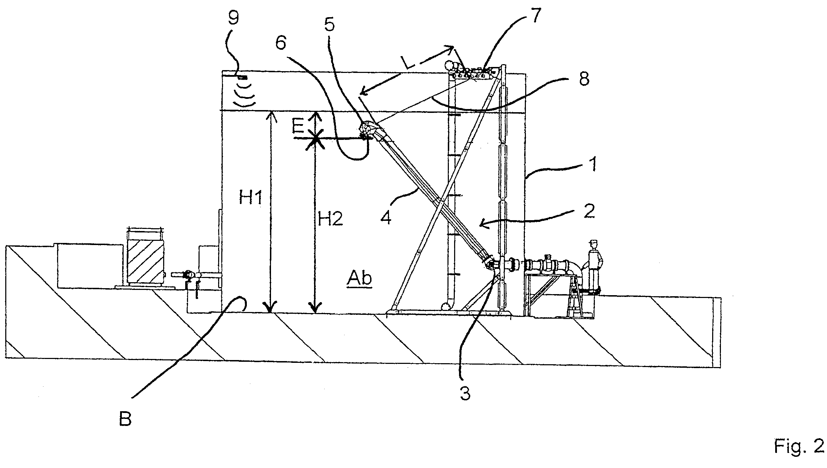

In den Fig. 1 und 2 ist in einem Klärbecken 1 ein Dekanter 2 mit seinem einen Ende schwenkbar an einem Schwenklager 3 gehalten. Der Dekanter 2 weist ein sich vom Schwenklager 3 erstreckendes Rohr 4 und einen am zweiten Ende des Rohrs 4 sich senkrecht dazu erstreckenden Dekanterkopf 5 auf. Der Dekanterkopf 5 weist an seiner einem Boden B des Klärbeckens 1 zugewandten Unterseite eine schlitzförmige Wassereintrittsöffnung 6 auf. Mit dem Bezugszeichen 7 ist eine Winde bezeichnet, auf welcher ein mit dem Dekanterkopf 5 verbundenes Seil 8 aufgenommen ist. Mit dem Bezugszeichen L ist eine Länge des Stellglieds bzw. des Seils 8 bezeichnet. Die Länge L beschreibt den jeweiligen Abstand zwischen dem Dekanterkopf 5 und der Schwenkvorrichtung bzw. der Winde 7.

Mit dem Bezugszeichen 9 ist eine erste Messeinrichtung zur Messung der Füllhöhe H1 von im Klärbecken 1 aufgenommenem Abwasser Ab bezeichnet. Bei der ersten Messereinrichtung 9 kann es sich um eine Ultraschall- oder Radarmesseinrichtung handeln. Ein Abstand der Wassereintrittsöffnung 6 zum Boden B ist mit dem Bezugszeichen H2 bezeichnet. Aus der Differenz der Füllhöhe H1 und dem Abstand H2 ergibt sich die mit dem Bezugszeichen E bezeichnete Eintauchtiefe E der Wassereintrittsöffnung 6. Die Eintauchtiefe wird in der Praxis zweckmäßigerweise in einem Bereich von 30 bis 80 cm, vorzugsweise von 40 bis 70 cm, gehalten.

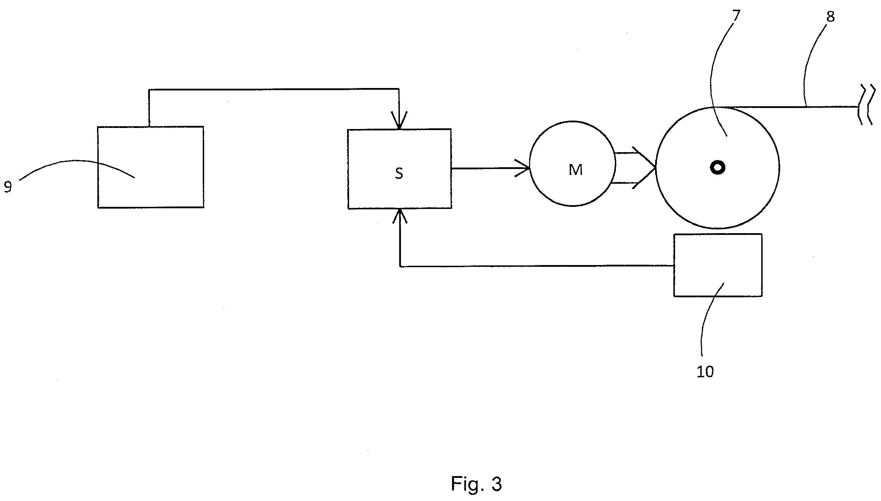

Fig. 3 zeigt schematisch ein Blockschaltbild einer Steuerung S. Bei der Steuerung S kann es sich um eine herkömmliche Prozessrechnersteuerung handeln. Mit dem Bezugszeichen 10 ist eine zweite Messeinrichtung bezeichnet, mit der ein Drehwinkel der Winde 7 erfasst und an die Steuerung S übermittelt wird. Mit der ersten Messeinrichtung 9 wird die Füllhöhe H1 gemessen und ein entsprechendes Signal ebenfalls an die Steuerung S übermittelt.

Mittels der Steuerung S wird aus dem von der zweiten Messeinrichtung 10 gemessenen Drehwinkel der Abstand H2 ermittelt. Ferner wird mit der Steuerung S eine Differenz zwischen der Füllhöhe H1 und dem Abstand H2 berechnet. Eine daraus sich ergebende Eintauchtiefe E wird mit einem vorgegebenen Wert der Eintauchtiefe E verglichen. In Abhängigkeit des beim Vergleich erzielten Ergebnisses wird der zum Antrieb der Winde 7 vorgesehene Motor M so angesteuert, dass die Eintauchtiefe E auf den vorgegebenen Wert der Eintauchtiefe E eingestellt wird.

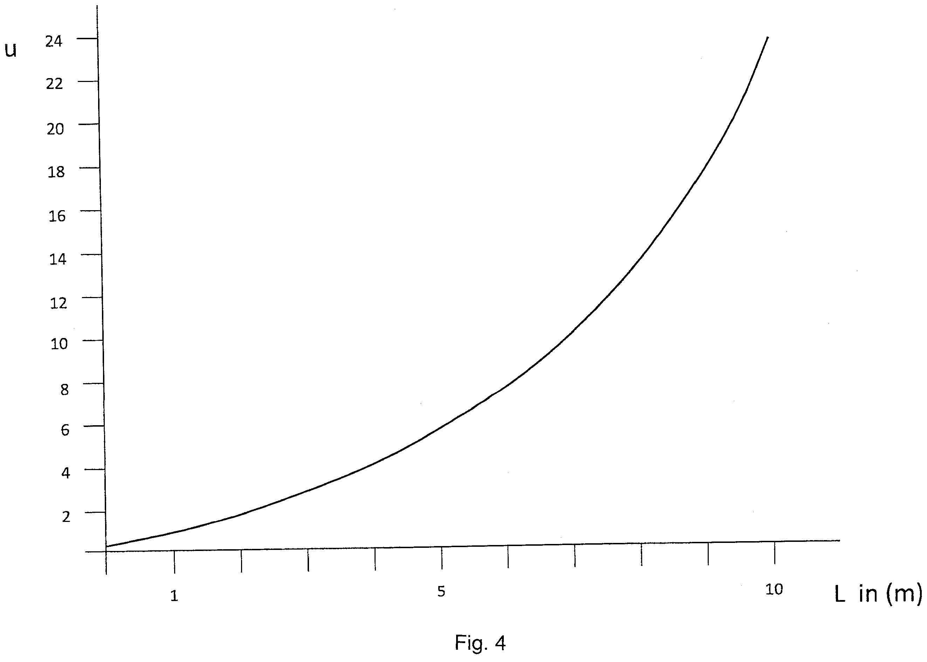

Fig. 4 zeigt schematisch die abgewickelte Länge L des Seils 8 bzw. des Stellglieds über der Anzahl der Umdrehungen U der Winde 7. Mit abnehmender Anzahl der Umdrehungen U der Winde 7 nimmt deren Durchmesser wegen des darauf aufgewickelten Seils 8 zu. Die Länge L des Seils 8 nimmt pro Umdrehung U der Winde 7 mit zunehmender Anzahl der Umdrehungen U ab.

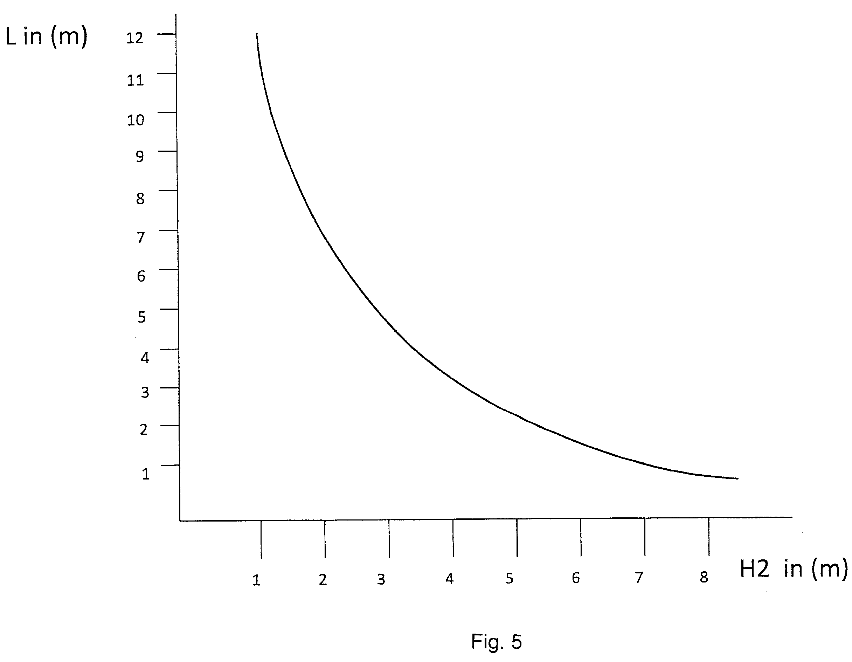

Fig. 5 zeigt schematisch den Abstand H2 über der Länge L des Stellglieds 8. Der Abstand H2 und die Länge L des Stellglieds stehen über trigonometrische Zusammenhänge miteinander in Beziehung.

Unter Verwendung der in den Fig. 4 und 5 gezeigten Funktionen kann aus dem jeweiligen Drehwinkel der Winde 7 auf den Abstand H2 geschlossen werden. In den Fig. 4 und 5 ergibt sich der jeweilige Drehwinkel durch Multiplikation der Anzahl der Umdrehungen der Winde 7 mit 360°.

### Bezugszeichenliste

- 1: Klärbecken
- 2: Dekanter
- 3: Schwenklager
- 4: Rohr
- 5: Dekanterkopf
- 6: Wassereintrittsöffnung
- 7: Winde
- 8: Seil
- 9: erste Messeinrichtung
- 10: zweite Messeinrichtung

- Ab: Abwasser
- B: Boden
- E: Eintauchtiefe
- H1: Füllhöhe
- H2: Abstand
- L: Länge
- M: Motor
- S: Steuerung

## Patentansprüche

1. Vorrichtung zum Dekantieren eines in einem Klärbecken (1) aufgenommenen Überstands, umfassend:
einen an einem Klärbecken (1) schwenkbar angebrachten Dekanter (2) mit einem Rohr (4), dessen eines Ende schwenkbar in einem Schwenklager (3) gehalten ist und an dessen anderem Ende ein sich senkrecht dazu erstreckender Dekanterkopf (5) mit einer Wassereintrittsöffnung (6) vorgesehen ist,
eine über ein längenveränderbares Stellglied (8) mit dem Dekanter (2) verbundene Schwenkvorrichtung (7) zum Anheben und Absenken der Wassereintrittsöffnung (6) bezüglich eines Bodens (B) des Klärbeckens (1),
eine erste Messeinrichtung (9) zur Messung einer Füllhöhe (H1) des im Klärbecken (1) aufgenommenen Abwassers (Ab),
eine Einrichtung zur Bestimmung einer Länge (L) des Stellglieds (8),
eine Auswerteeinrichtung, mit der aus der Länge (L) des Stellglieds (8) über eine trigonometrische Beziehung ein Abstand (H2) der Wassereintrittsöffnung (6) des Dekanters (2) zum Boden (B) des Klärbeckens (1) bestimmbar ist, und
eine Steuerung (S) zum Steuern der Schwenkvorrichtung (7) derart, dass eine sich aus der Differenz zwischen der mit der Messeinrichtung (9) gemessenen Füllhöhe (H1) und dem mittels der Auswerteeinrichtung bestimmten Abstand (H2) ergebende Eintauchtiefe (E) der Wassereintrittsöffnung (6) in einem vorgegebenen Bereich gehalten wird.

2. Vorrichtung nach Anspruch 1, wobei das Stellglied (8) aus der folgenden Gruppe ausgewählt ist: Seil, Gurt, Kette, und wobei die Schwenkvorrichtung eine Winde (7) zur Aufnahme eines solchen Stellglieds (8) umfasst.

3. Vorrichtung nach einem der vorhergehenden Ansprüche, wobei zum Antrieb der Winde (7) ein Elektromotor (M) oder ein Hydraulikmotor vorgesehen ist.

4. Vorrichtung nach einem der vorhergehenden Ansprüche, wobei bei Verwendung eines Gurts eine erste Breite der Winde (7) etwa einer zweiten Breite des Gurts entspricht, so dass der Gurt im Wesentlichen deckungsgleich auf der Winde (7) aufgenommen ist.

5. Vorrichtung nach einem der vorhergehenden Ansprüche, wobei die Einrichtung zur Bestimmung der Länge (L) des Stellglieds (8) eine zweite Messeinrichtung (10) zur Messung eines Drehwinkels der Winde (7) umfasst.

6. Vorrichtung nach einem der vorhergehenden Ansprüche, wobei die Auswerteeinrichtung eine Regelstufe umfasst, mit der die Eintauchtiefe (E) regelbar ist.

7. Vorrichtung nach einem der vorhergehenden Ansprüche, wobei die Steuerung (S) eine erste Schaltfunktion umfasst, mit der ein Betrieb der Schwenkvorrichtung (7) bei Erreichen einer vorgegebenen oberen Position des Dekanterkopfs (5) unterbrochen wird.

8. Vorrichtung nach einem der vorhergehenden Ansprüche, wobei die Steuerung (S) eine zweite Schaltfunktion umfasst, mit der ein Betrieb der Schwenkvorrichtung (7) bei Erreichen einer vorgegebenen unteren Position des Dekanterkopfs (5) unterbrochen wird.

## Claims

1. A device for decanting a supernatant received in a clarifier (1), comprising:
a decanter (2) which is pivotally attached to a clarifier (1) and which comprises a pipe (4), of which one end is held pivotally in a pivot bearing (3) and at the other end of which a decanter head (5) extending perpendicularly thereto and having a water inlet opening (6) is provided,
a pivoting device (7) which is connected to the decanter (2) via an actuator (8) with an adjustable length for raising and lowering the water inlet opening (6) relative to a floor (B) of the clarifier (1),
a first measuring device (9) for measuring a fill level (H1) of the wastewater (Ab) received in the clarifier (1),
a device for determining a length (L) of the actuator (8),
an evaluating device with which a distance (H2) of the water inlet opening (6) of the decanter (2) to the floor (B) of the clarifier (1) can be determined from the length (L) of the actuator (8), and
a controller (S) for controlling the pivoting device (7) such that a water inlet opening (6) immersion depth (E), which results from the difference between the fill level (H1) measured with the measuring device (9) and the distance (H2) determined by means of the evaluating device, is kept in a specified range.

2. The device according to Claim 1, wherein the actuator (8) is selected from the following group: cable, belt, chain, and wherein the pivoting device comprises a winch (7) for receiving such an actuator (8).

3. The device according to one of the preceding claims, wherein an electric motor (M) or a hydraulic motor is provided to drive the winch (7).

4. The device according to one of the preceding claims, wherein, with use of a belt, a first width of the winch (7) corresponds approximately to a second width of the belt, such that the belt is received on the winch (7) substantially congruently.

5. The device according to one of the preceding claims, wherein the device for determining the length (L) of the actuator (8) comprises a measuring device (10) for measuring an angle of rotation of the winch (7).

6. The device according to one of the preceding claims, wherein the evaluating device comprises a control stage, with which the immersion depth (E) can be controlled.

7. The device according to one of the preceding claims, wherein the controller (S) comprises a first switching function, with which an operation of the pivoting device (7) is interrupted when a predefined upper position of the decanter head (5) is reached.

8. The device according to one of the preceding claims, wherein the controller (S) comprises a second switching function, with which an operation of the pivoting device (7) is interrupted when a predefined lower position of the decanter head (5) is reached.

## Revendications

1. Dispositif pour décanter un surnageant recueilli dans un bassin de décantation (1), comprenant:
un décanteur (2) disposé de manière à pouvoir pivoter sur un bassin de décantation (1) avec un tube (4) dont une extrémité est maintenue de manière à pouvoir pivoter dans un palier pivotant (3) et à l'autre extrémité duquel est prévue une tête de décanteur (5) s'étendant verticalement par rapport à celle-ci avec un orifice d'entrée d'eau (6),
un dispositif de pivotement (7) relié au décanteur (2) par l'intermédiaire d'un élément de réglage (8) de longueur variable pour relever et abaisser l'orifice d'entrée d'eau (6) par rapport à un fond (B) du bassin de décantation (1),
un premier dispositif de mesure (9) pour la mesure d'une hauteur de remplissage (H1) des eaux usées (Ab) recueillies dans le bassin de décantation (1),
un dispositif pour la détermination d'une longueur (L) de l'élément de réglage (8),
un dispositif d'évaluation permettant de déterminer à partir de la longueur (L) de l'élément de réglage (8) par le biais d'un rapport trigonométrique une distance (H2) de l'orifice d'entrée d'eau (6) du décanteur (2) au fond (B) du bassin de décantation (1), et
une commande (S) pour commander le dispositif de pivotement (7) de telle sorte qu'une profondeur d'immersion (E) de l'orifice d'entrée d'eau (6) résultant de la différence entre la hauteur de remplissage mesurée (H1) au moyen du dispositif de mesure (9) et la distance (H2) déterminée au moyen du dispositif d'évaluation est maintenue dans une plage prédéfinie.

2. Dispositif selon la revendication 1, en ce que l'élément de réglage (8) est sélectionné à partir du groupe suivant: câble, courroie, chaîne, et en ce que le dispositif de pivotement comprend un treuil (7) pour recevoir un tel élément de réglage (8).

3. Dispositif selon l'une des revendications précédentes, en ce qu'un moteur électrique (M) ou un moteur hydraulique est prévu pour l'entraînement du treuil (7).

4. Dispositif selon l'une des revendications précédentes, en ce que lors de l'utilisation d'une courroie une première largeur du treuil (7) correspond approximativement à une seconde largeur de la courroie, de sorte que la courroie soit reçue en grande partie en coïncidant sur le treuil (7).

5. Dispositif selon l'une des revendications précédentes, en ce que le dispositif pour la détermination de la longueur (L) de l'élément de réglage (8) comprend un second dispositif de mesure (10) pour mesurer un angle de rotation du treuil (7).

6. Dispositif selon l'une des revendications précédentes, en ce que le dispositif d'évaluation comprend un palier de réglage servant au réglage de la profondeur d'immersion (E).

7. Dispositif selon l'une des revendications précédentes, en ce que la commande (S) comprend une première fonction de commutation avec laquelle un fonctionnement du dispositif de pivotement (7) est interrompu à atteinte d'une position supérieure prédéfinie de la tête de décanteur (5).

8. Dispositif selon l'une des revendications précédentes, en ce que la commande (S) comprend une seconde fonction de commutation avec laquelle un fonctionnement du dispositif de pivotement (7) est interrompu à atteinte d'une position inférieure prédéfinie de la tête de décanteur (5).
